# EUROPEAN PATENT APPLICATION

(11) **EP 3 318 925 A1**
(43) Date of publication of application: **09.05.2018**
(21) Application number: 16197031.4
(22) Date of filing: 03.11.2016
(51) Int. Cl.: G03B 17/56

(54) **MOUNTING APPARATUS**

(71) Applicant: Nokia Technologies Oy, 02610 Espoo (FI)
(72) Inventor: MEYER, Axel, 00850 Helsinki (FI); PENTINPURO, Pasi, 91660 Ahmas (FI); GRÖHN, Mika, 90540 Oulu (FI); SANGUINETTI, Alejandro, 00180 Helsinki (FI)
(74) Representative: Nokia EPO representatives

(57) **Abstract**

An apparatus comprisings a mount (2); an adjustment mechanism (6) arranged to couple the mount (2) to a support (4), the adjustment mechanism (6) being configured to enable rotation of the mount (2) relative to the support (4); and a movement sensor (130) arranged to sense movement of the apparatus and to generate movement information based on the sensed movement, wherein the mount (2) is adapted to be connected to the device (8) such that the device (8) is at a location distal from the adjustment mechanism (6) and the adjustment mechanism (6) is responsive to the generated movement information to rotate the mount (2) relative to the support (4), whereby to compensate for the sensed movement.

## Description

### Technical Field

The present invention relates to mounting apparatus for compensating sensed movement.

### Background

It is useful for some types of devices to remain stable during use and mounting apparatus is used for such purposes. For example, tripods can hold a device stable during use by providing a mount for the device which is resistant to movement. It becomes more difficult to maintain a device stable when the apparatus holding the device can itself move.

Gimbals have been proposed to control the orientation of a device relative to a frame of reference. Gimbals involve mechanisms providing rotational freedom of movement which can be controlled to compensate for sensed movement. Such mechanisms, when used in mounting apparatus, can extend around the device to be stabilised, or can be located in the device to be stabilised. They do however typically restrict the device in ways other than movement, for example occluding or limiting a field of view around the device which is mounted thereon.

### Summary

According to an embodiment, there is provided mounting apparatus for use with a device. The apparatus comprises a mount; an adjustment mechanism arranged to couple the mount to a support, the adjustment mechanism being configured to enable rotation of the mount relative to the support; and a movement sensor arranged to sense movement of the apparatus and to generate movement information based on the sensed movement. The mount is adapted to be connected to the device such that the device is at a location distal from the adjustment mechanism and the adjustment mechanism is responsive to the generated movement information to rotate the mount relative to the support, whereby to compensate for the sensed movement.

The device may be adapted for use with an imaging device having a 360 degree field of view in an imaging sensing plane, the mount having a longitudinal axis which is arranged to be positioned, when the imaging device is mounted thereon, normal to the image sensing plane.

The rotation of the mount relative to the support may be around a first axis, whereby to compensate for the sensed movement. The rotation of the mount relative to the support may be around the first axis and a second axis, which are mutually orthogonal, whereby to compensate for the sensed movement.

The support may comprise a handle portion for use in a hand-held mode of operation.

In some embodiments, the adjustment mechanism may be configured to enable the mount to translate relative to the support along a longitudinal axis of the mounting apparatus.

In other embodiments, the adjustment mechanism may comprise an intermediate portion, the intermediate portion comprising a first end and a second end, the first end being coupled to the mount to enable rotation of the intermediate portion relative to the mount about a mount axis, and the second end being coupled to the support to enable rotation of the intermediate portion relative to the support about a support axis, wherein the mount axis has a first orientation and the support axis has a second orientation, different from the first orientation. The intermediate portion may comprise a plurality of parts, a first of the plurality of parts being coupled to a second of the plurality of parts to enable rotation of the first part relative to the second part about an intermediate axis.

In further embodiments, the adjustment mechanism may comprise a first guide rail configured to facilitate movement of the mount in a first guiding plane. The adjustment mechanism may also comprise a second guide rail configured to facilitate movement of the mount in a second guiding plane, and wherein the first guiding plane is substantially perpendicular to the second guiding plane. The adjustment mechanism may comprise an actuator attached to the first guide rail and to the support, for rotating the first guide rail, whereby to enable rotation of the mount relative to the support.

The adjustment mechanism may comprise a plurality of linear actuators, whereby to enable rotation of the mount relative to the support.

The mounting apparatus may comprise a controller configured to receive a signal from a movement sensor in the device and to generate said movement information.

According to another embodiment, there is provided mounting apparatus for use with a device. The apparatus comprises mounting means; adjustment means for coupling the mounting means to a support means, the adjustment means being configured to enable rotation of the mounting means relative to the support means; and movement sensing means for sensing movement of the apparatus and for generating movement information based on the sensed movement. The mounting means is for connection to the device such that the device is at a location distal from the adjustment means and the adjustment means is responsive to the generated movement information to rotate the mounting means relative to the support means, whereby to compensate for the sensed movement.

The device may be for use with an imaging means having a 360 degree field of view in an imaging sensing plane, the mounting means having a longitudinal axis which is arranged to be positioned, when the imaging means is mounted thereon, normal to the image sensing plane.

The rotation of the mounting means relative to the support means may be around a first axis, whereby to compensate for the sensed movement. The rotation of the mounting means relative to the support means may be around the first axis and a second axis, which are mutually orthogonal, whereby to compensate for the sensed movement.

The support means may comprise a handle means for use in a hand-held mode of operation.

In some embodiments, the adjustment means may be configured to enable the mounting means to translate relative to the support means along a longitudinal axis of the mounting apparatus.

In other embodiments, the adjustment means may comprise an intermediate portion, the intermediate portion comprising a first end and a second end, the first end being coupled to the mount to enable rotation of the intermediate portion relative to the mount about a mount axis, and the second end being coupled to the support to enable rotation of the intermediate portion relative to the support about a support axis, wherein the mount axis has a first orientation and the support axis has a second orientation, different from the first orientation. The intermediate portion may comprise a plurality of parts, a first of the plurality of parts being coupled to a second of the plurality of parts to enable rotation of the first part relative to the second part about an intermediate axis.

In further embodiments, the adjustment means may comprise a first guiding means configured to facilitate movement of the mount in a first guiding plane. The adjustment mechanism may also comprise a second guiding means configured to facilitate movement of the mounting means in a second guiding plane, and wherein the first guiding plane is substantially perpendicular to the second guiding plane. The adjustment means may comprise actuation means attached to the first guiding means and to the support means, for rotating the first guiding means, whereby to enable rotation of the mounting means relative to the support means.

The adjustment means may comprise a plurality of linear actuation means, whereby to enable rotation of the mount relative to the support.

The mounting apparatus may comprise control means configured to receive a signal from a movement sensor in the device and to generate said movement information.

According to another embodiment, there is provided an apparatus comprising an imaging device, a mount, an adjustment mechanism, and a movement sensor. The imaging device has a 360 degree field of view in an image sensing plane, and the mount has a longitudinal axis which is positioned normal to the image sensing plane. The adjustment mechanism is arranged to couple the mount to a support, the adjustment mechanism being configured to enable rotation of the mount relative to the support. The movement sensor is arranged to sense movement of the apparatus and to generate movement information based on the sensed movement. The mount is connected to the imaging device such that the imaging device is at a location distal from the adjustment mechanism and the adjustment mechanism is responsive to the generated movement information to rotate the mount relative to the support, whereby to compensate for the sensed movement. The imaging device may be configured to generate imaging information, and the apparatus may then further comprise an image processor to process the imaging information to compensate for movement of the mount around the longitudinal axis.

According to another embodiment, there is provided an apparatus comprising imaging means, mounting means, adjustment means, and movement sensing means. The imaging means has a 360 degree field of view in an image sensing plane, and the mounting means has a longitudinal axis which is positioned normal to the image sensing plane. The adjustment means is arranged to couple the mounting means to a support means, the adjustment means being configured to enable rotation of the mount relative to the support. The movement sensing means is for sensing movement of the apparatus and for generating movement information based on the sensed movement. The mounting means is connected to the imaging means such that the imaging means is at a location distal from the adjustment means and the adjustment means is responsive to the generated movement information to rotate the mounting means relative to the support means, whereby to compensate for the sensed movement. The imaging means may be for generating imaging information, and the apparatus may then further comprise an image processing means for processing the imaging information to compensate for movement of the mount around the longitudinal axis.

Further features and advantages of the invention will become apparent from the following description of preferred embodiments of the invention, given by way of example only, which is made with reference to the accompanying drawings.

### Brief Description of the Drawings

Figure 1 shows a schematic representation of an imaging device and apparatus according to an embodiment;
Figure 2 shows a schematic representation of an imaging device and apparatus according to the embodiment of Figure 1, in which the support is rotated to a stabilisation position;
Figure 3 shows a diagrammatic representation of an imaging device and apparatus according to an embodiment;
Figure 4 shows Figure 3 marked to show how a compensation axis can be offset from a device;
Figure 5 shows Figure 3 marked up to show how an adjustment mechanism may be positioned relative to a device;
Figure 6 shows a diagrammatic representation of an adjustment mechanism for use with the apparatus of Figure 3;
Figure 7 shows a diagrammatic representation of a part of a guide rail system used in Figure 3;
Figure 8 shows a diagrammatic representation of the part of the guide rail system of Figure 7 maintaining rotational position about the y axis in the face of rotation about the x axis;
Figure 9 shows a diagrammatic sectional view of the adjustment mechanism of Figure 3;
Figure 10 shows another diagrammatic sectional view of the adjustment mechanism of Figure 3;
Figure 11 shows a diagrammatic representation of an imaging device and apparatus according to another embodiment;
Figure 12 shows a diagrammatic representation of a side view of the imaging device an apparatus of Figure 11;
Figure 13 shows a diagrammatic representation of a section through the apparatus and device of Figure 11, configured to adjust a relative angle between a support and a mount;
Figure 14 shows a diagrammatic representation of a side view of the apparatus and device of Figure 11, configured to adjust a relative angle between a support and a mount;
Figure 15 shows a diagrammatic representation of an imaging device and apparatus according to a further embodiment of the apparatus;
Figure 16 shows a diagrammatic representation of the apparatus of Figure 9 adjusting a relative angle between a support and the imaging device;
Figure 17 illustrates how different angles of rotation may result in an orientation to be compensated; and
Figure 18 is a functional block diagram of a sensor, controller and actuator system that may be used in embodiments.

### Detailed Description

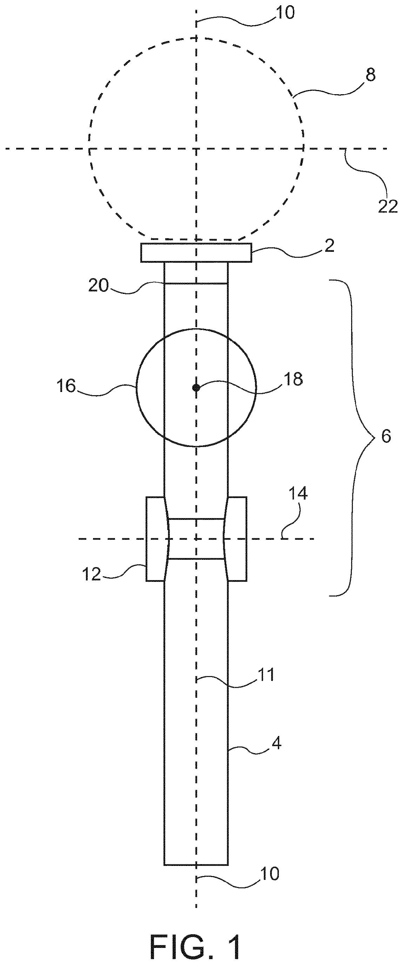

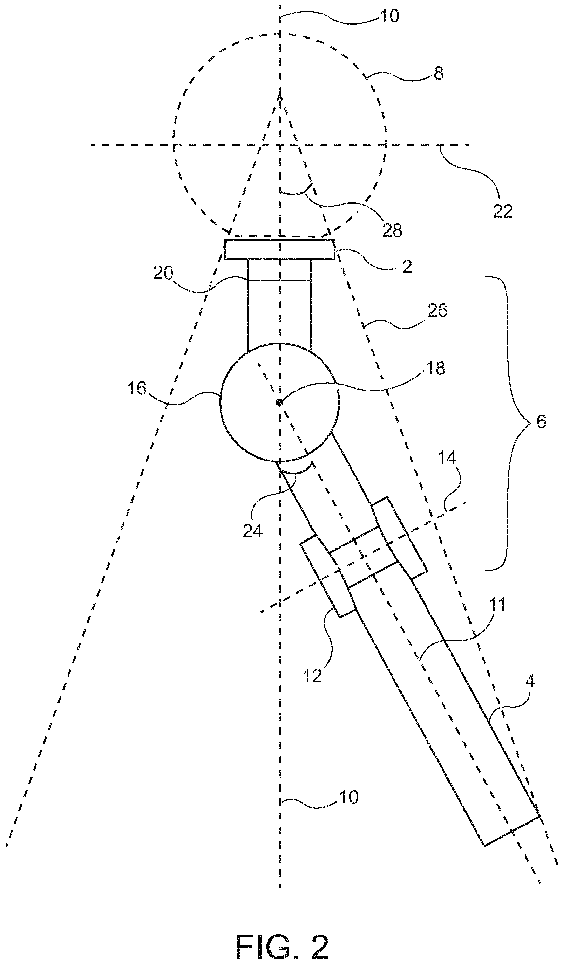

Figures 1 and 2 show schematic views of an embodiment of the invention. These are described for a general understanding of various embodiments of the invention. Whilst other embodiments are described below in relation to other Figures using different reference numerals, where the features described are to be understood to be similar and the description of those features is intended to apply mutatis mutandis, reference numerals incremented by 100 or multiples of 100 are used.

A "degree of freedom" can be rotation about an axis or translation along an axis. For example, in a 3-dimensional Cartesian coordinate system a degree of freedom can be rotation or translation along one of the x, y and z axes. Thus, in order to completely define both orientation and position, six degrees of freedom are required. In such a Cartesian system, the z-axis may be vertical (generally parallel to the direction of gravity) and the x and y axes therefore horizontal and between them define a horizontal plane.

In the embodiment of Figures 1 and 2, there is shown a mounting apparatus which includes a mount 2, which may be an elongate mount, a support 4, which is a generally rod-shaped handle, and an adjustment mechanism 6. The mounting apparatus is for use with a device 8, for example an imaging device 8. The mount 2 defines a central, longitudinal axis 10, also referred to herein as the z axis. The support 4 defines an axis 11, which is the central axis of the rod-shaped handle, which is rotatable with respect to the z axis 10. When the support 4 is in a centralised position, in which no compensation for movement has occurred, the longitudinal axis 11 of the support coincides with the z axis 10.

The support 4 is movably connected to the mount 2 via the adjustment mechanism 6. The mount 2 is attached at one end to the adjustment mechanism 6 and has a mechanical connector, not shown, at the other end, for releasably attaching a device 8, for example an imaging device 8, to the mount 2. The mechanical connector is located centrally of the longitudinal axis and is adapted to hold the imaging device 8 at a location distal from the adjustment mechanism 6. The connector is, for example, a threaded socket or pin, bayonet connection, cam connection, quick-release connection or magnetic connection. For example a screw thread connector may be used as defined in ISO 1222:2010 "Photography - Tripod connections" for connecting a camera, such as a 1/4-20 Coarse (UNC) thread as defined in Unified Thread Standard (UTS) or a 3/8-16 UNC thread.

The adjustment mechanism 6 is arranged to adjust the position of the mount 2 relative to the support 4 in response to a signal derived from a movement sensor or set of movement sensors (not shown in Figures 1 and 2, but described in detail below) associated with the apparatus to compensate for movement detected by the movement sensor or set of movement sensors.

The mounting apparatus may comprise the movement sensor or set of movement sensors. At least part of the movement sensor or set of movement sensors may be in the support 4, wherein the movement sensor or set of movement sensors is responsive to tilt movement of the support 4 in at least two mutually orthogonal axes. The adjustment mechanism 6 may be adapted to compensate for the tilt movement of the support and to maintain the mount 2 in a substantially constant orientation, by adjustment of the position of the mount 2 relative to the support 4. Alternatively, the movement sensor or set of movement sensors may be in the mount 2, wherein the movement sensor or set of movement sensors is responsive to tilt movement of the mount 2 in at least two mutually orthogonal axes, and wherein the adjustment mechanism 6 is adapted to compensate for the tilt movement of the mount 2, to maintain the mount in a substantially constant orientation, by adjustment of the position of the mount 2 relative to the support 4. Further alternatively, a movement sensor or one each of a set of movement sensors may be located in a respective mutually rotatable part of the adjustment mechanism 6, wherein the movement sensor or set of movement sensors is responsive to tilt movement of the mount 2 in each of two mutually orthogonal axes corresponding to the compensation actuated in that part of the adjustment mechanism 6. Further, a movement sensor may sense rotation of the mount 2 or the support 4, or part of the adjustment mechanism 6, around the longitudinal axis 10 and the adjustment mechanism 6 is adapted to compensate for the rotational movement of the mount 2 or the support 4 as sensed.

The mounting apparatus may alternatively, or in addition, comprise a controller configured to receive a signal from a movement sensor, or set of movement sensors, in an imaging device 8 which is attachable to the mount 2. The adjustment mechanism 6 may be adapted to compensate for the tilt movement of the imaging device 8, to maintain the imaging device 8 in a substantially constant orientation, by adjustment of the position of the mount 2 relative to the support 4 in response to movement information generated from the received signals.

The adjustment mechanism 6 is configured to enable rotation of the mount relative to the support around two mutually orthogonal compensation axes coinciding with x axis 14 and y axis 18, using x-axis actuator 12 and y-axis actuator 16 respectively. The adjustment mechanism 6 may also be configured to enable rotation of the mount relative to the support around a compensation axis coinciding with the z axis 10 using a z-axis actuator 20. Alternatively, or in addition, an imaging device may be configured to generate imaging information, and the imaging device or mounting apparatus can further comprise an image processor to process the imaging information to compensate for movement of the mount around the longitudinal axis. Further alternatively, or in addition, an imaging device may be configured to generate imaging information, and the imaging information may be post-processed to compensate for movement of the mount around the longitudinal axis. Optionally, the adjustment mechanism 6 may also allow z-axis translation of the mount 2 relative to the support 4, in response to a signal from a translational movement sensor sensing z-axis movement of the mount 2 or imaging device 8.

The imaging device 8 is in this embodiment a 360 degree imaging device for filming virtual reality scenes. For example, the imaging device 8 may be a Nokia OZO™ camera, commercially available from Nokia Technologies, Oy. It has an image sensing plane 22, orthogonal to the z axis 10, in which the imaging device 8 has a 360 degree field of view. In general, the imaging device may be a substantially spherical device which has the capability to capture spherical images, i.e. images from all directions around the imaging device 8.

Referring to Figure 2, embodiments of the invention are designed to reduce occlusion of the imaging device 8 by the mounting apparatus when in a stabilising position. In Figure 2, the mounting apparatus is shown in use, in which a hand (not shown) or other apparatus (not shown) would hold the support 4 in order to hold up the imaging device 8.) Here, the support 4 is rotated with respect to the y axis 18 in response to sensed movement, such that the support's longitudinal axis 11 makes a stabilisation angle 24 with respect to the mount's longitudinal axis 10. A maximum occlusion angle created by the apparatus itself when in a stabilising position, as shown in Figure 2, is defined by taking the line of the outermost part of the handle and the outermost edge of the mount 2, and taking the angle 28 made by the resulting occlusion cone 26 with respect to the longitudinal axis 10. In this embodiment, and in fact in each of the embodiments described herein, the maximum occlusion angle 28 of the apparatus when in a stabilising position is less than the stabilisation angle 24 - namely the largest angle between the longitudinal axis 10 of the mount and the longitudinal axis 11 of the support. This characteristic of embodiments of the invention provides for reduced occlusion of images captured, even when the mounting apparatus is performing a significant amount of angular compensation.

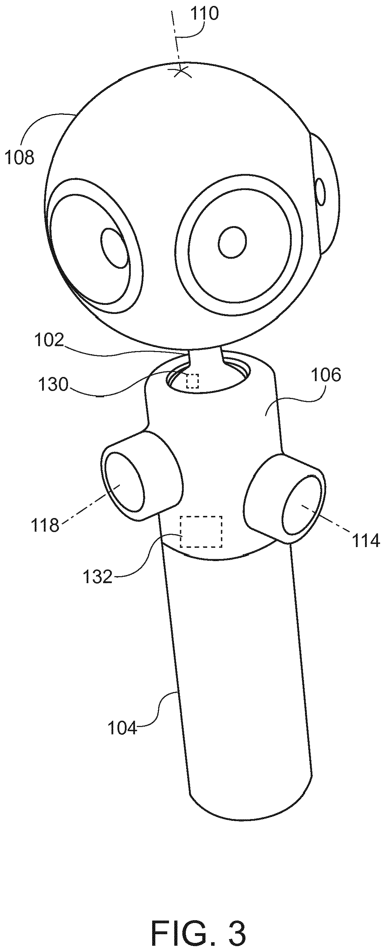

Figure 3 shows a diagrammatic representation of an apparatus according to another embodiment. The apparatus includes a mount 102, which may be an elongate mount, an adjustment mechanism 106, which may be a stabilisation mechanism, and a sensor 130.

The mount 102 is arranged to be connected to a device 108, for example an imaging device 108 as described above.

The adjustment mechanism 106 couples the mount 102 to a support 104 and is configured to enable rotation of the mount 102 relative to the support 104. Optionally, the adjustment mechanism 106 may also allow z-axis translation of the mount 102 relative to the support 104.

A sensor 130 is arranged to sense movement of the apparatus and to generate movement information based on the sensed movement. For example, sensor 130 may sense movement directly or indirectly, for example by sensing position, a change in position, speed, a change in speed, velocity, a change in velocity, acceleration or a change in acceleration. The sensed movement may be linear (along an axis) or rotational (about an axis). Likewise, the generated movement information or data may relate to one or more of these variables. As shown in Figure 3, the sensor is integrated into the mount, although it can also be provided in the support 104 or device 108 in other embodiments, as will be described in more detail below.

The mount 102 is adapted to be connected to the device 108 such that the device 108 is at a location distal from the adjustment mechanism 106. By locating the device 108 distal from the adjustment mechanism 106, the device 108 may have greater isolation from vibrations introduced by the adjustment mechanism 106, and the adjustment mechanism 106 may occupy a reduced portion of the outside surface area of the device 108. For example, a distally located adjustment mechanism 106 may occupy a smaller proportion of the surface area of a hypothetical sphere containing the device 108.

The adjustment mechanism 106 is responsive to the generated movement information to rotate the mount 102 relative to the support 104, whereby to compensate for the sensed movement. In this way, the device 108 may be maintained stable or stabilised in at least one degree of freedom in an overall frame of reference, despite movement of the support 104 relative to the frame of reference. The effect of movement of the support 104 on the device 108 is reduced but need not be reduced to zero in all embodiments.

In some embodiments, at least one axis defining a degree of freedom in which sensed movement may be compensated is offset from the device 108 and/or does not pass through the device 108. Such an axis may be referred to as a "compensation axis" or a "stabilised axis". For example, the at least one axis may be an axis about which rotation may be compensated or stabilised and/or an axis along which translation may be compensated or stabilised. When a compensation axis is offset from and/or does not pass through the device, components of the adjustment mechanism 106 associated with that axis can be located away from device in use. This may allow the adjustment mechanism 106 to be located further from the device, thereby allowing easier access to the device and/or a greater field of view from the device without being obstructed by the adjustment mechanism 106. During operation, to compensate sensed movement, the position of a device relative to the compensation axis will change. In some embodiments a compensation axis may be offset from the device in at least some of the possible relative positions of the device to the compensation axis. In other embodiments a compensation axis may be offset from the device in all of the possible relative positions of the device to the compensation axis.

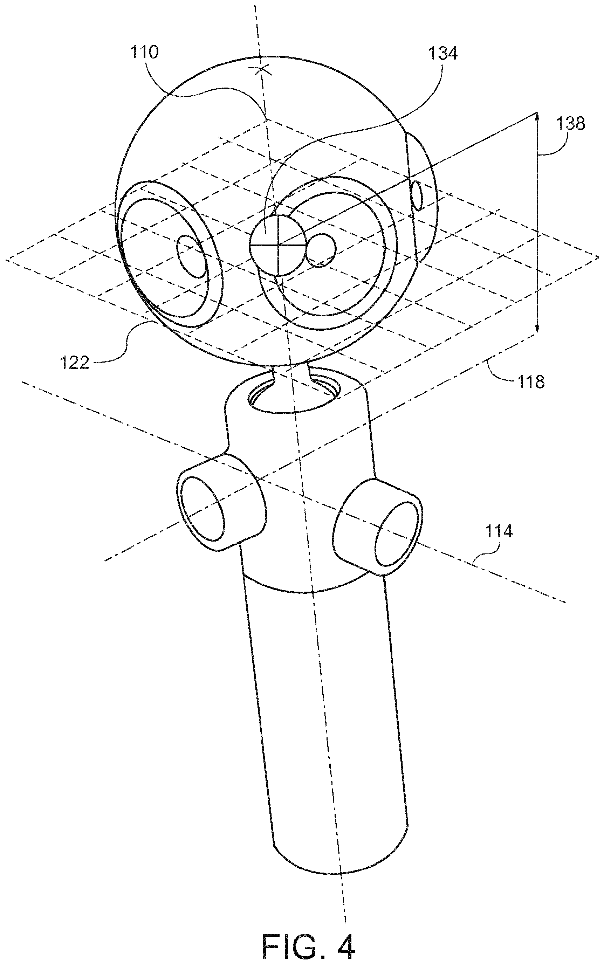

Figure 4 shows the apparatus of Figure 3 marked up to show how at least one compensation axis can be offset from a device. It shows two compensation axes, an x axis 114 and a y axis 118 which are positioned or arranged such that they are offset from a device 108 when attached to the mount 102. As depicted in Figure 3, the x axis 114 and y axis 118 do not pass through the device 108.

The x axis 114 and y axis 118 may be located in the same plane or may themselves be offset from each other. A centre of mass 134 of the device 108 may be located a distance 138 from a closest axis (y axis 118 as shown in Figure 4) or the offset compensation plane if the x axis 114 and y axis 118 are co-planar. The distance 138 may be at least 5cm, at least 10cm, at least 20cm, at least 30cm, at least 60cm or at least 1m. In other embodiments a centre of volume or a point of the device 108 closest to an offset compensation axis may instead be used to measure the distance from the offset compensation axis. As shown in Figure 4, a third compensation axis which in this case is a vertical axis or z axis 110 may also be provided, which may pass through the device 108 and also pass through the centre of mass 134. In other embodiments, the z axis 110 does not pass through the centre of mass 134 and instead passes through a centre of volume of the device 108 or passes through at least part of the device 108.

As mentioned above, z axis 110 may be a vertical axis or longitudinal axis. In embodiments, the adjustment mechanism 106 may be wholly positioned away from the device 108 in the direction of the z axis 110, or positioned distal of the device 108 in the direction of z axis 110. This can limit the degree to which the adjustment mechanism 106 encroaches on the device 108, thereby allowing access to more of the device 108 when it is attached to the mount 102 and/or allowing a greater field of view from the device 108. The adjustment mechanism 106 may be wholly located at least 5 cm, at least 15 cm, at least 30 cm, at least 60 cm or at least 1m from the device 108 in the direction of a longitudinal axis 110. Although in this embodiment the z axis 110 is a compensation axis, which in which changes in orientation can be compensated, in other embodiments the z axis 110 may not be a compensation axis and may instead be defined as a vertical, longitudinal or primary axis of the device.

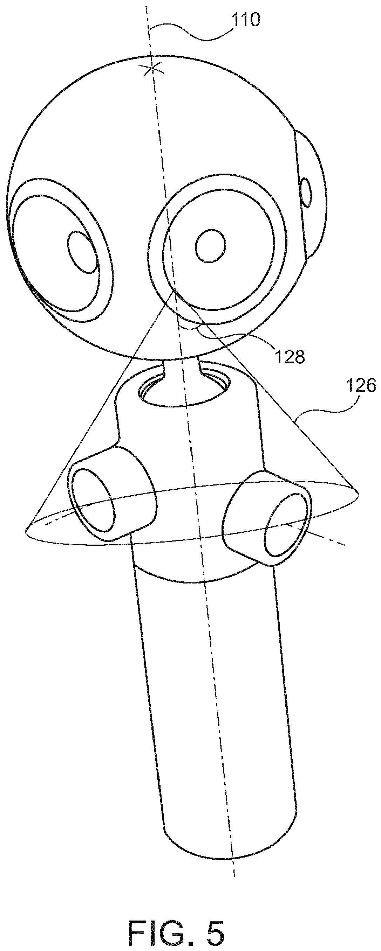

Referring to Figure 5, the mount 102, support 104 and adjustment mechanism 106 may be positioned such that, in use, they remain within an occlusion cone 126 extending from the portion of the mount adapted to be connected to the device. For example, the cone may diverge outwardly in the direction away from the portion of the mount adapted to be connected to the device. The cone may have an axis coaxial with, or parallel to, an axis defining at least one degree of freedom. As discussed above, an axis defining at least one degree of freedom may also be referred to as a compensation axis or a stabilisation axis. The occlusion cone may have an occlusion angle 128 (the angle defined by an angled face and the longitudinal axis, which in this case is coaxial with the z axis 110) which is less than or equal to 80 degrees, less than or equal to 75 degrees, less than or equal to 70 degrees, less than or equal to 65 degrees, less than or equal to less than or equal to 60 degrees, less than or equal to 55 degrees, less than or equal to 50 degrees, less than or equal to 45 degrees, or less than or equal to 40 degrees. The smaller the occlusion angle 128 the greater the access available to the device 108 and less obtrusive the apparatus is on a field of view of the device 108. For example, the adjustment mechanism 106 and mount 102 may be positioned within an occlusion cone 126 having an occlusion angle 128 and diverging away from the device 108 along a z axis 110.

The compensation axes may be fixed relative to the device 108 or may be movable and not fixed relative to the device 108. For example, the position of the compensation axes may depend on the configuration of the adjustment mechanism 106, as the support 104 and mount 102 are moved to different relative positions. In the apparatus of Figures 4 and 5, z axis 110 is movable relative to the device 108, while x and y axes 114, 118 are fixed relative to the device 108.

Referring to Figure 4, the device 108 may comprise an imaging device having a 360 degree field of view in an imaging sensing plane 122, the mount 102 having a longitudinal axis which is arranged to be positioned, during operation of the imaging device, normal to the image sensing plane. The above described distal positioning relative to the adjustment mechanism 106 and/or offset at least one axis defining a degree of freedom may then assist in reducing the degree to which the apparatus encroaches on the captured image.

The way in which the adjustment mechanism 106 can move the mount 102 relative to the support 104 may vary. For example, for many devices, control over orientation may be required, so rotation of the mount 102 relative to the support 104 may be provided. Providing rotation about a single axis can be useful, for example, to maintain or control a device pointing in a particular compass bearing (when the rotation is about the z axis in a Cartesian frame of reference). Providing rotation about two axes can be useful, for example, to maintain a device horizontal (when the rotation is about the x and y axes in a Cartesian frame of reference). To fully control orientation relative to a frame of reference, at least three degrees of freedom are required, for example rotation about each of the x, y and x axes in a Cartesian coordinate system. The adjustment mechanism 106 of Figure 3 provides three degrees of freedom to allow orientation to be fully controlled in three dimensions.

In an example, the rotation of the mount 102 relative to the support 104 causes the device 108 to remain substantially static, whereby to compensate for the sensed movement. Devices which can benefit from remaining substantially static include imaging devices, for example allowing longer exposure times without blurring and/or steady video recording.

In another example, the rotation of the elongate mount 102 relative to the support 104 causes the device 108 to move, whereby to compensate for the sensed movement. For example, the device 108 may be controlled to move independent of movement of the support 104, such as panning an imaging device during video recording, or changing an orientation of a device 108 relative to the support 104.

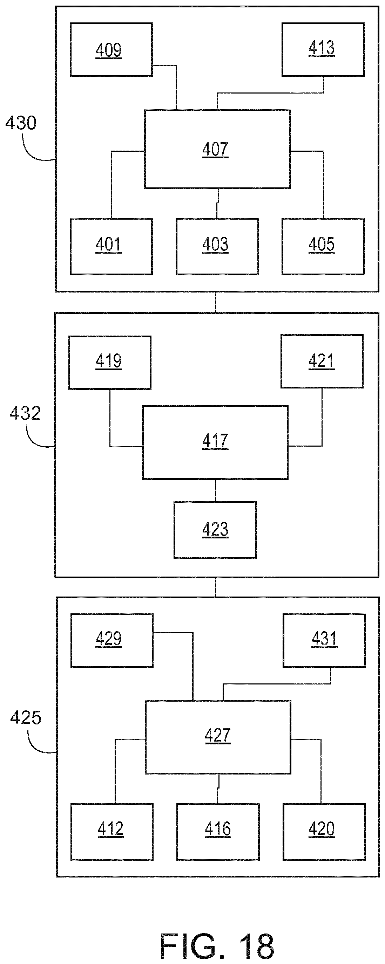

The adjustment mechanism 106 may be controlled by a controller or control system 132. The control system 132 may, for example, be provided in the adjustment mechanism (as shown in Figure 3) or provided elsewhere, such as in the support 104 or the device 108. The control system 132 may be configured to receive a signal from the sensor 130 and to generate said movement information. For example, the control system 132 has an input coupled or connected to the sensor 130 and an output coupled or connected to the adjustment mechanism 106. The coupling or connection between the sensor 130, control system 132 and adjustment mechanism 106 may be wired or wireless. Example wired interfaces may use serial connections, I2C or other point-to-point communication standards, or networking standards including but not limited to, serial connections, such as USB, parallel connections, and network connections, such as Ethernet or Controller Area Networks. Example wireless interfaces include, but are not limited to, Bluetooth, Bluetooth Low Energy, Zigbee, ANT, ANT+, standards in the IEE 802.1 family, and/or standards in the IEEE 802.15 family. The control system 132 is discussed in more detail below, with reference to Figure 18.

Operation of the adjustment mechanism 106 responsive to the sensed movement may be achieved by an actuator supplied with a control signal by the control system 132. The actuator may be a hydraulic, pneumatic, electric, thermal, magnetic or mechanical actuator. The actuator may be a rotational or linear actuator. Non-limiting examples of actuators include motors, such as stepper motors, and pneumatic or hydraulic pistons.

Although the sensor 130 and control system 132 are depicted as separate elements in Figure 3, integrated into the mount and support, respectively, they may be provided elsewhere. For example, one or both may be integrated into the device 108, mount 102, adjustment mechanism 106 and support 104. For example, the device 108 may include a processing system which can be used as a control system. The device 108 may also include a suitable sensor or the sensor may be provided elsewhere, such as integrated in to the mount 102. Providing the sensor 130 and control system 132 elsewhere than the device 108 enables the apparatus to function independently from the device 108. For example, the apparatus can be retro-fit to an existing, off the shelf, device.

In general, the sensor 130 may sense movement in one or more degrees-of-freedom. A single sensor or at least two sensors may be provided. Where at least two sensors are provided they may be located in different parts of the apparatus (for example in both the support 104 and the mount 102). Examples of suitable sensors 130 include accelerometers, tilt sensors, gyroscopes and compasses, such as a single-axis or multi-axis accelerometers, and a single-axis or multi-axis gyroscope. The sensor may be a MEMS devices (capacitive or piezoelectric).

The support 104 may comprise a handle portion for use in a hand-held mode of operation. During hand-held operation an operator may create unintentional vibrations and perturbations which can be compensated by the apparatus. In embodiments including a handle portion, a sensor may be located in the mount 102. Locating the sensor in the mount 102 when the mount is connected to the device 108 in a known, non-variable position and orientation enables the position of the device 108 to be inferred from the position of the mount 102 without requiring a sensor in the device 108 itself. A sensor may also be located in the device 108. A sensor may also be located in the handle 104, in which case additional information will be needed to determine the orientation and or position of the device 108 because the presence of the adjustment mechanism 106 means that the position of the device 108 relative to the handle is variable. The additional information may be a known physical relationship, such as the current positions of elements in the adjustment mechanism 106, or an additional sensor input.

The adjustment mechanism 106 may be configured to enable the elongate mount 102 to rotate about a first axis and to enable the support 104 to rotate about a second axis.

The adjustment mechanism 106 may comprise an intermediate portion, the intermediate portion comprising a first end and a second end, the first end being coupled to the mount 102 to enable rotation of the intermediate portion relative to the mount about a first axis, and the second end being coupled to the support to enable rotation of the intermediate portion relative to the support about a second axis, wherein the first axis has a first orientation and the second axis has a second orientation, different from the first orientation. The intermediate portion may comprise a plurality of parts, a first of the plurality of parts being coupled to a second of the plurality of parts to enable rotation of the first part relative to the second part about a third axis.

Movement of the mount 102 may be facilitated by providing an adjustment mechanism with at least one guide rail configured to facilitate movement of the elongate mount 102 in a first guiding plane. The adjustment mechanism may also comprise a second guide rail configured to facilitate movement of the elongate mount in a second guiding plane, and wherein the first guiding plane is substantially perpendicular to the second guiding plane. The adjustment mechanism may comprise an actuator attached to the first guide rail and to the support, for rotating the first guide rail, whereby to enable rotation of the elongate mount relative to the support.

As described above with reference to Figure 4, the mount 102 can be rotated about three axes, 114, 118, 110 by an adjustment mechanism 106. A first axis, or x axis, 114 and a second axis, or y axis, 118 are perpendicular to each other and offset from the device 108, together defining a horizontal plane which is also offset from the device 108. The third axis, or z axis, 110 extends from the plane defined by the x and y axes 114, 118. As depicted in Figure 4 the z axis 1108 is mutually perpendicular to the x and y axes 114, 118, however this will not always be the case; the z axis 110 will be angled relative to the x or y axis 114, 118 as the adjustment mechanism 106 rotates about those axes.

The support 104 extends distally from the mount 102 and adjustment mechanism 106 and, as described above, is adapted to be handheld, having a generally cylindrical configuration. Alternatively, the support may have other configurations. For example, it may have one or more protrusions or recesses and/or an ergonomic shape to assist handheld operation. In another example the support 104 may be adapted for connection to another apparatus, such as a moveable platform, for non-handheld use.

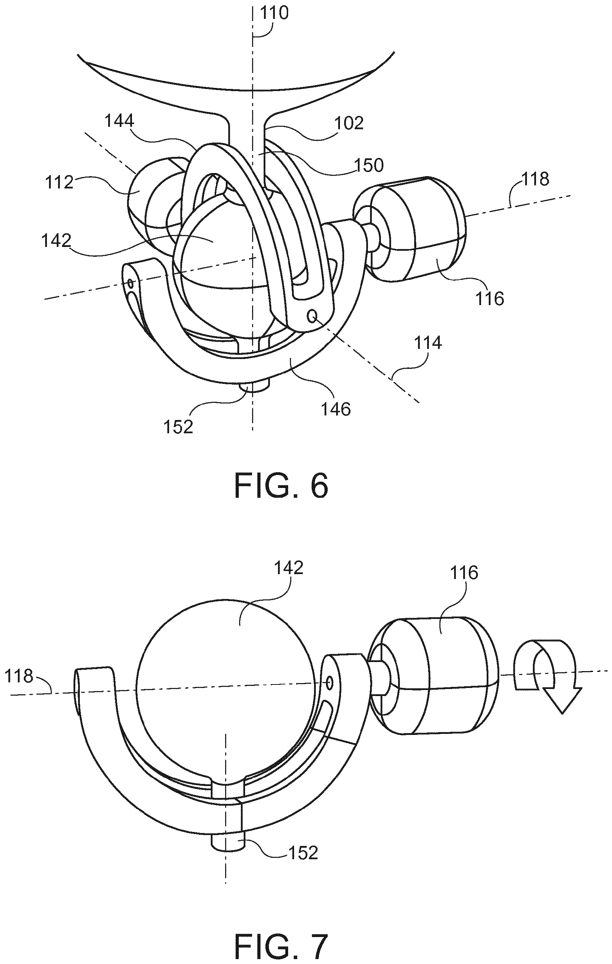

Figure 6 shows a diagrammatic representation of an adjustment mechanism 106 for use with the apparatus of Figure 3. The mount 102 has a substantially spherical element or ball 142 at an opposite end along the z axis 110 and an end which is connected to the device 108. First and second guide rails 144, 146 are connected to rotational actuators, 112, 116 such as stepper motors. The ball 142 is provided with two protrusions or guide pins 150, 152 which engage the guide rails 144, 146. As shown, part of the mount 102 extending along z axis 110 forms one guide pin 150. The other guide pin 152 extends diametrically opposite from the other side of the ball 142, coaxial with z axis 110.

In use, the rotational actuators 112, 116 can be rotated to move the corresponding guide rail, rotating the ball 142 about respective axes 114, 118 by engaging the respective pin. The guide pins 150, 152 and guide rails 144, 146 enable rotation about axis 118 to be independent of rotation about axis 114, so that rotation about one axis does not alter the other. For example, rotation about axis 118 by actuator 116 will rotate guide rail 146, which engages pin 152 to adjust orientation about the axis 118. Meanwhile, pin 150 is free to rotate about the axis 118 along the guide rail 144 without changing the angular orientation about axis 114 set by guide rail 144 and actuator 112. Actuators 112, 116 and the associated adjustment mechanism of guide rails and guide pins can therefore adjust, control or compensate an orientation with respect to the plane defined by axes 114, 118. For example, this may enable a horizon of the imaging device 108 to be kept level despite movement of the support 104 tilting the plane defined by axes 114 and 118 relative to the horizon.

When the device 108 is an imaging device with a 360 degree field of view, the z axis 110 may not be compensated by actuators 112, 116, and rotations about the z axis may be later compensated in software. Alternatively or additionally, a third rotational actuator (not shown) may be associated with the connection between the mount 102 and the imaging device 108, to rotate the imaging device 108 about the z axis 110.

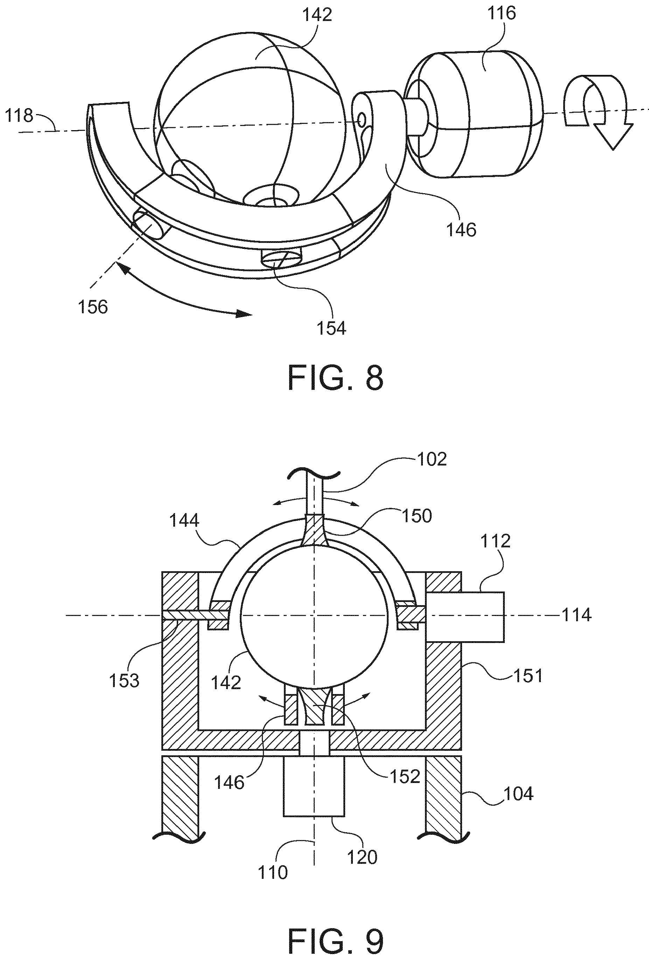

Figure 7 shows a diagrammatic representation of the guide rail system shown in Figure 6 for an axis 118, so that the interaction between the pin and the guide rail can be seen more clearly. Figure 8 then shows a diagrammatic representation of the part of the guide rail system of Figure 7 maintaining rotational position about the one axis in the face of rotation about another perpendicular axis. The pin 152 is free to move along the guide rail 146 between, for example, positions 154 and 156 which represent different angular positions about axis 114.

Figure 9 is a diagrammatic sectional view of the adjustment mechanism 106 of Figure 3, taken along axis 114. The guide rail 144 is pivotally or rotationally mounted in a mechanism housing 151, which contains the adjustment mechanism 106. As depicted, the guide rail 144 is mounted by a pin or axle 153 which is coaxial with the axis 114. The actuator 112 extends partially out of the mechanism housing 151, allowing a more compact mechanism housing overall.

Figure 9 also depicts on option to rotate the mount 102 about the z axis 110. An actuator 120, for example a motor, such as a stepper motor, is provided in the support 104 to rotate the mechanism housing 151 about the z axis 110. Providing the actuator in the support 104 means that the z axis 110 is defined by the support 104.

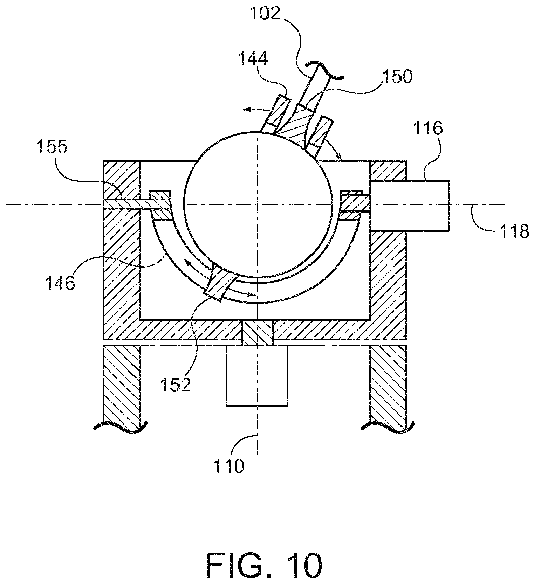

Figure 10 is a diagrammatic sectional view of the adjustment mechanism of Figure 3, taken along axis 118. Figure 10 shows how the guide rail 146 is pivotally or rotationally mounted in the mechanism housing via a pin or axle 155 which is coaxial with axis 118.

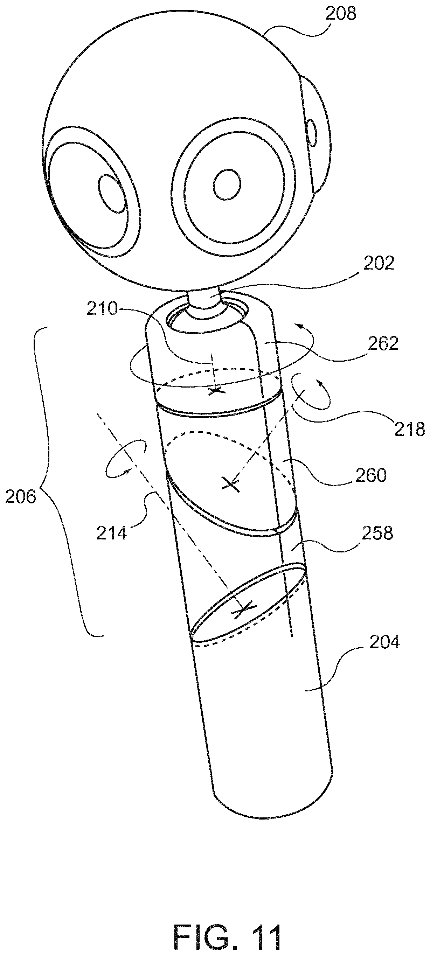

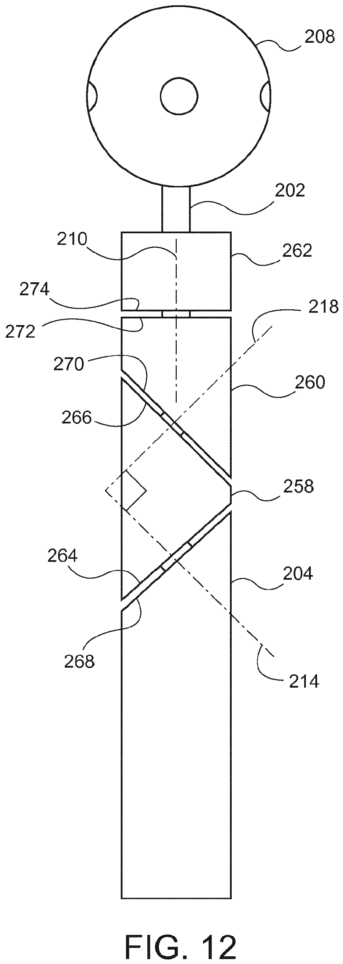

Figure 11 shows a diagrammatic representation of a device 208 and apparatus according to another embodiment. Figure 12 shows a diagrammatic representation of a side view of the imaging device and apparatus of Figure 11, to enable the geometry to be seen more clearly.

The device 208 is a 360 degree imaging device as described above with reference to Figure 3, but in this embodiment a mount 202 is attached to a support 204 via an adjustment mechanism 206 which comprises at least two adjacent rotational elements 258, 260, 262 which are generally cylindrical and have opposite planar ends defined by a plane intersecting the cylinder. Each planar end defines an axis perpendicular to the plane and passing through the centre of a surface defined by the planar end. At least one of the rotational elements 258, 260 has non-parallel planar ends, so that the axis defined by the planar end is angled relative to a central or longitudinal axis of the rotational element.

As can be seen most clearly in Figure 12, a first rotational element 258 has a first or distal planar end 264 defining a first axis, or support axis, 214 and a second or proximal planar end 266 defining a second axis, or intermediate axis, 218. The first planar end 264 abuts a corresponding planar surface 268 formed on the support 204. The second planar end 266 abuts a corresponding first or distal planar end 270 of a second rotational element 260. The second rotational element 260 also has a second or distal planar end 272 defining a third axis, or mount axis, 210 and which abuts a corresponding planar surface 274 formed on the third rotational element 262.

Each of the first, second and third axis 214, 218, 210 is orientated differently with respect to the support 204. Thus relative rotation of one or more of the rotational elements 258, 260, 262 results in a change in orientation of the mount 202 relative to the support 204.

Rotational element 258 defines the relationship between the first and second axes 214, 218. The first planar end 264 and second planar end 266 are both angled at 45 degrees relative to the axis of the cylinder defining rotational element 258. The first and second planar ends 264, 266 are also positioned to define a 90 degree angle between the first axis 214 and second axis 218, as indicated in Figure 12. The first axis 214 and second axis 218 are therefore always perpendicular to each other.

Rotational element 260 defines the relationship between the second and third axes 218, 210. The first planar end 270 is angled at 45 degrees relative to the axis of the cylinder defining rotational element 260 and the second planar end 272 is perpendicular to the axis of the cylinder defining rotational element 260. Thus, the second axis 218 and third axis 210 are therefore always angled at 45 degrees relative to each other.

Rotation about the first axis 214 can be achieved by rotating the first rotational element 258 relative to the support 204. This may be achieved, for example, by providing a motor, such as a stepper motor, within the rotational element 258 or the support 204 and rotationally connecting the rotational element 258 to the support 204 for rotation about the first axis 214.

Rotation about the second axis 218 can be achieved by rotating the first rotational element 258 relative to the second rotational element 260. This may be achieved, for example, by providing a motor, such as a stepper motor, within the rotational element 258 or the rotational element 260 and rotationally connecting the rotational element 258 to the rotational element 260 for rotation about the second axis 218.

Rotation about the third axis 210 can be achieved by rotating the second rotational element 260 relative to the third rotational element 262. This may be achieved, for example, by providing a motor, such as a stepper motor, within the rotational element 260 or the rotational element 262 and rotationally connecting the rotational element 260 to the rotational element 262 for rotation about the third axis 210.

As described above, rotation of the rotational elements 258, 260, 262 of Figure 11 results in relative rotation of the mount 202 relative to the support 204. As the elements rotate relative to each other, the position of the axes will change relative to the device 208, while the first and second axes 214, 218 are offset from the imaging device 208.

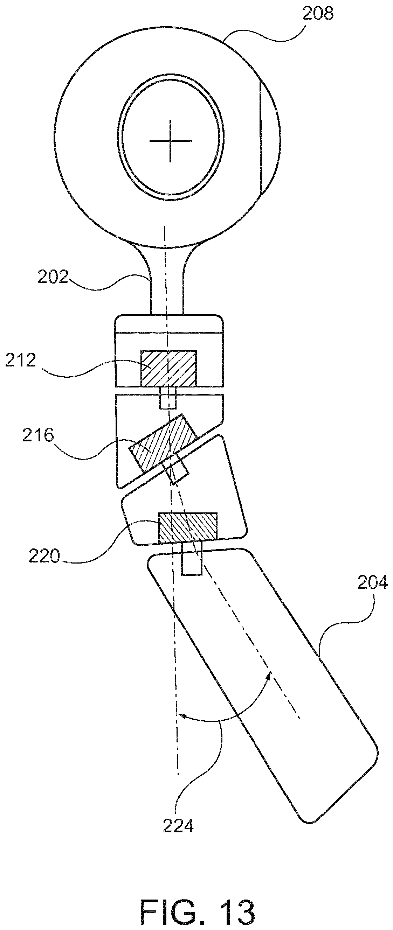

Figure 13 shows a diagrammatic representation of a section through Figure 11 demonstrating adjustment of a stabilisation angle 224 between the support 204 and the mount 202 to which device 208 is connected. Figure 13 also shows how motors 212, 216, 220 can be provided in the rotational elements 258, 260, 262. Here, each rotational element has a motor for rotation about one axis. In other embodiments a rotational element may have a motor for rotation about two axes, or no axes (when immediately adjacent rotational elements will control the relative rotation). A motor may also be provided in the support 204.

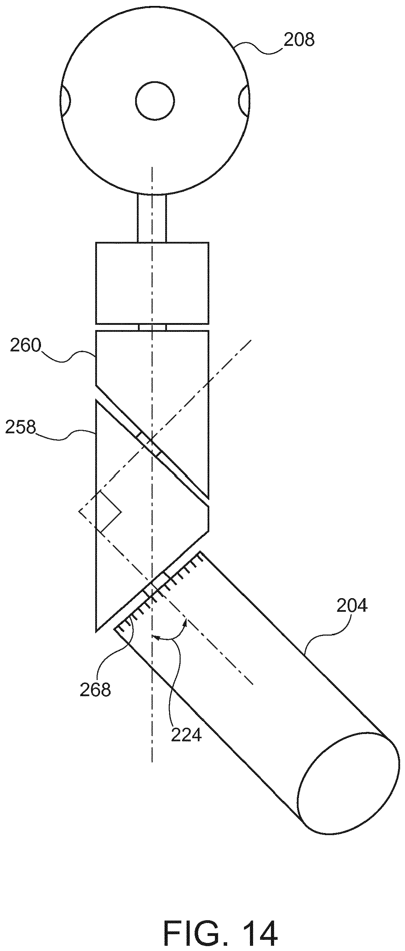

Figure 14 shows a diagrammatic representation of a side view of Figure 11 demonstrating adjustment of a stabilisation angle 224 between the support 204 and the mount 202 to which imaging device 208 is connected. The relative rotation between support 204 and rotational element 258 means that from this view the angling of surface 268 on support 204 is not as apparent.

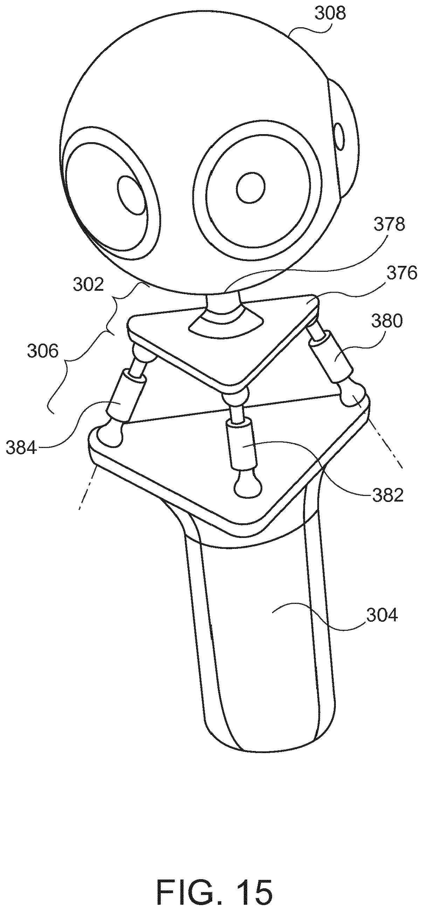

Figure 15 shows a diagrammatic representation of a device and apparatus according to a further embodiment of the apparatus, in which the adjustment mechanism comprises a plurality of linear actuators, whereby to enable rotation of the elongate mount relative to the support.

The apparatus of Figure 15 comprises a mount 302, including a platform 376 positioned distally of an elongate portion 378 which is attached to device 308 (for example the imaging device described above with reference to Figure 3). The adjustment mechanism 306 comprises three linear or longitudinal actuators 380, 382, 384, for example hydraulic or pneumatic cylinders or other telescopic actuator. Each actuator 380, 382, 384 is attached at a first end to the platform 376 through a ball or universal joint. A second end of each actuator 380, 382, 384 is attached to a proximal end of a support 304, again through a ball or universal joint. The points at which the actuators 380, 382, 384 are attached to the platform 376 and the support 304 define the vertices of a triangle in a plane, for example an equilateral triangle. As shown in Figure 15, the platform 376 and proximal end of the support 304 may also have a triangular shape, although embodiments may use different shapes.

By adjusting the relative length or extension of the linear actuators 380, 382, 384, the relative position and orientation of the platform 376 and the proximal end of the support 304 can be adjusted. The adjustment mechanism 306 can adjust orientation by rotating the platform 376 about two axes lying in the plane of the triangle defined by the connection points of the actuators. The adjustment mechanism 306 can also adjust translation along a third axis perpendicular to the plane of the triangle defined by the connection of the actuators.

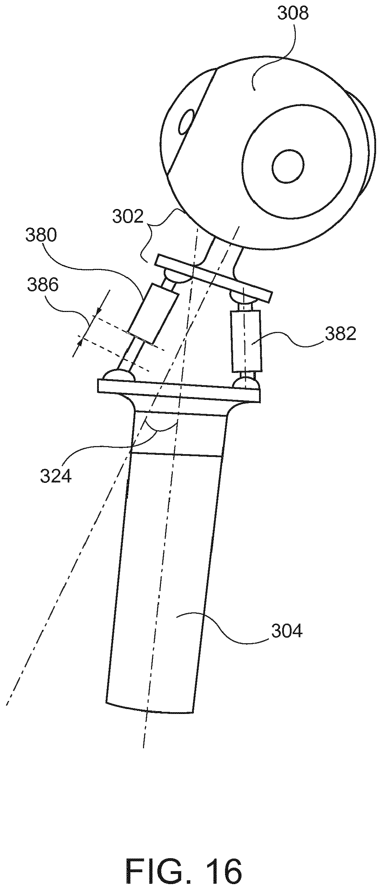

Rotation can be achieved by extending or retracting the linear actuators 380, 382, 384 by different relative amounts. Translation can be achieved by extending or retracting the linear actuators by the same relative amount. For example, Figure 16 shows a diagrammatic representation of the apparatus of Figure 15 adjusting a stabilisation angle 324 between the support 304 and the mount 302, and thus between the support 304 and the device 308. In this example, for clarity, two actuators 380, 382 are shown. It can be seen that one actuator 380 is extended by an additional length 386 compared to actuator 382, creating the angle 324.

In variations of the apparatus of Figure 15, different numbers of actuators may be provided than three, for example two or four, depending on the degrees of freedom which are desired to be controlled.

A control system which can be used with all the above described adjustment mechanisms will now be described. Referring to Figure 3, the control system 132 may be a feedback control system and use at least one of Proportional, Integral and Derivative control based on feedback from the sensor 130 to operate the adjustment mechanism 6; 106; 206; 306. In an embodiment the control system 132 is a Proportional, Integral and Derivative (PID) controller. The control system 132 may receive at least one direct input of data or information representing a variable to be controlled, for example data of a variable for each of the degrees of freedom to be controlled. Example variables include, but not limited to, rotational position around an axis or position along an axis. Alternatively or additionally, the control system 132 may include one or more indirect inputs of the degrees of freedom to be controller, such as a vector including components along at least two axes and which requires further calculations to determine a variable to be controlled. Examples of such further calculations include resolving vectors into a frame of reference and integrating derivative measurements (such as integrating velocity to give position).

The design of the control system 132 will depend on the particular combination of sensed variables and degrees of freedom to be controlled. In embodiments where a compensation axis is offset, the resulting system may be unstable, requiring active control to maintain a desired set point, such as a desired orientation relative to at least one axis. For example, for the configuration of Figure 4, described above, the system will be unstable as shown because the device is above the x and y axes 114, 118 and so any minor perturbation will result in an unwanted downward movement under gravity.

Design of control systems for unstable systems may seek to characterise the adjustment mechanism completely in terms of its equations of motion, and design an optimum control function for those equations. Alternatively, the parameters of the control system (for example the gain of the Proportional component, the gain of the Integral component and the fain of the Derivative component of a PID controller) may be iterated based on observed results to result in solution (which may or may not be optimal). As the number of degrees of freedom increase, the control system becomes more complex so that a numerical or iterative solution may be simpler to achieve. Various approaches to control system design may be used.

A benefit of a feedback control system is that it can simply receive feedback from the sensor and control the actuators appropriately to achieve the desired set-point. However, depending on where the sensor is located, inputs may need to be processed further before being input to the control system. For example, where the orientation of a device fixedly connected to the mount 2; 102; 202, 302 is required, and the sensor is in the mount 2; 102; 202, 302 or device 8; 108; 208; 308 then the output of the sensor correlated directly to the set-point in terms of the device 8; 108; 208; 308. However, if the sensor is located in the support 4; 104; 205; 304 or adjustment mechanism 6; 106; 206; 306, further information is required to determine position of the device 8; 108; 208; 308 in terms of the set-point. This may be provided by, for example taking the configuration of the adjustment mechanism 6; 106; 206; 306 into account (such as the rotational position of a stepper motor), or by using an additional sensor for this information.

As discussed above the sensor 130 may be included in the device 8; 108; 208; 308, such as an imaging device or camera unit, in the mount 2; 102; 202; 302 or in the support 4; 104; 204; 304. When the sensor is in the mount 2; 102; 202; 302 or the support 4; 104; 204; 304, the apparatus can be retrofitted to an existing device. For example, the mount 2; 102; 202; 302 may be connected to an imaging device through a screw-fix connection such as a tripod mount.

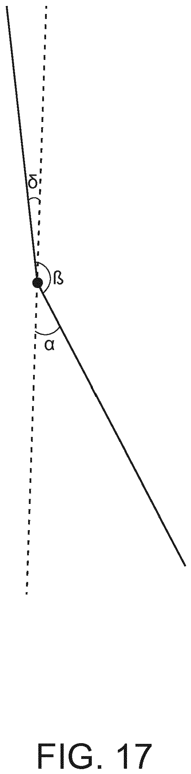

Figure 17 shows the relationship between, γ, the tilt angle of the mount 2; 102; 202; 302 and α, the tilt angle of the support 4; 104; 204; 304 about a single axis. β is the angle between the support 4; 104; 204; 304 and the mount 2; 102; 202; 302. In many cases, γ, is required to be maintained at zero, e.g., to keep a horizon level. Alternatively, γ, may be set at a constant angle, for example during filming. In general, δγ is maintained at zero, so that the δβ introduced by the adjustment mechanism balances the δα caused by movement of the support.

When the sensor is included in the device 8; 108; 208; 308 or mount 2; 102; 202; 302, γ can be measured directly (or δγ in some embodiments). Thus the control system 132 can receive the measured γ or δγ as an input and generate a suitable control signal for the actuator in the adjustment mechanism to adjust β so that γ is maintained at the desired set point.

When the sensor is included in the support 4; 104; 204; 304, γ or δγ is not measured directly, instead α or δα is measured. Applying α or δα will not necessarily be a suitable correction because the adjustment mechanism 6; 106; 206; 306 itself contributes to the angle and will bring further variables such as friction and inertia; it is therefore necessary to determine any correction for β to know how to drive the adjustment mechanism to maintain the set-point of γ. This can be done by for example having a mechanical model of the adjustment mechanism 6; 106; 206; 306, mapping a control or drive signal to the resulting change so that the configuration is known for a particular control signal. Alternatively or additionally, a feedback control system may use a measurement of β or δβ in addition to the measurement of α or δα in the support. For example these parameters could be measured with an angular sensor or a rotation encoder.

Wherever it is included, the sensor must be fixedly attached to the part whose orientation is being sensed. Suitable sensors for orientation include tilt sensors and gyroscopes. A tilt sensor can measure a tilt angle by taking the acceleration due to gravity into account (along with trigonometry to resolve the horizontal component). Tilt sensors may be analogue or digital (for example Micro Electro-Mechanical System (MEMS) devices). The reference for a tilt sensor may be gravity, in which case they cannot measure yaw in the vertical plane. A gyroscope can measure angular velocity and provide measurements in all three rotational axes. A gyroscope may be a device or could be an Inertial Measurement Unit (IMU) including both an accelerometer and a gyroscope.

As discussed above, the control system may communicate with the sensor using wired communication, such as USB, or wireless communication such as Bluetooth™. For example a suitable transmitter may be provided in the sensor and a corresponding receiver in the control system. The sensor may include several sub-sensors and consolidate, aggregate or collect several sensed variables into one communication path to the system.

The control system also needs to communicate with the adjustment mechanism 6; 106; 206; 306. For example a wired or wireless interface to the adjustment mechanism may be provided, with a transmitter in the control system and a corresponding receiver in the adjustment mechanism. A further controller may be provided in the adjustment mechanism 6; 106; 206; 306 for driving the actuators of the adjustment mechanism based on the received control signal.

The control system may maintain a variable or parameter at a set point (for example to maintain a level horizon or a constant heading of a device in spite of movement of the support). The control system may also control variables to different values to enable, panning for example, or a change of heading. Where variables are controlled to different values by a control system, this may allow a device to remain pointing at a particular point of reference, such as panning around an object during filming.

For an image capture device, the captured image itself could form an input to the control system, and in some embodiments the captured image may be the only sensor required. One example of how to use the captured image as a control system input would be to specify a target on which to focus within a captured image, for example by manual input indicating a target on a display of the captured image. Once the target is specified, images captured in real time are correlated with sensed movement, or movement is detected through changes in the images themselves. These can be used to track the target. The motors controlling configuration of the adjustment mechanism 6; 106; 206; 306 can then be controlled so as to move the imaging device back to the target.

Image recognition techniques may examine not just changes in movement (translation), but also orientation of tracked objects to detect for tilt. For example, a horizon or vertical direction may be detected and used as an input for the stabilisation.

Figure 18 shows a diagrammatic block diagram of an exemplary sensor and control system that may be used to control the above-described adjustment mechanisms. A sensor 430, in this example a self-contained Bluetooth sensor, such as is commercially available from YOST Labs as a "3-space" Bluetooth sensor. The sensor 430 comprises a 3-axis accelerometer 401, a 3-axis rate gyroscope 430 and a 3-axis compass 405. These are connected to a sensor processor 407, which can combine the inputs from the accelerometer 401, gyro 403 and compass 405 to determine the sensor orientation. The sensor also includes battery 409, such as a lithium polymer battery, and a Bluetooth interface 413. The sensor 430 is configured to provide information or data on sensed movement. As discussed above the sensor 430 can be fixedly attached to a suitable element of the apparatus, such as the mount, support or adjustment mechanism.

Sensor 430 is coupled by Bluetooth to a controller 432. The controller 432 comprises a controller processor 417 (which may be a single-core, dual-core or multi-core, a microprocessor, a digital signal processor or an ASIC, for example), a battery 419, such as a lithium polymer battery, a Bluetooth receiver 421 and a transmitter 423.

The processor 417 implements a control system to maintain a device attached to the mount at desired orientation or position based on information received from the sensor 430 via the Bluetooth receiver 421. For example, the control system may be a PID controller. The processor 417 generates or determines a control signal for the actuators in the adjustment mechanism, based on the received sensed movement. This control signal is then transmitted to the actuator system 425 using transmitter 423. The transmitter 423 may be, for example a wired interface or wireless interface. In this example, the transmitter is a USB interface, which transmits the control signal to a corresponding receiver 431 in the actuator system.

An actuator processor 427 processes the control signal to drive the actuators 412, 416, 420 to compensate for sensed movement by the sensor 430, taking power from an actuator battery 429, which may be a lithium polymer battery.

Although Figure 18 shows the sensor 430, controller 432 and actuator system 425 as separate elements in other embodiments one or more of them may be combined into a single element. For example the sensor and controller may be integrated (which may be case where an attached device functions as a controller and sensor).

Embodiments of the present disclosure additionally or alternatively comprise an apparatus comprising an adjustment mechanism arranged to couple a mount to a support, the adjustment mechanism being configured to enable rotation of the mount relative to the support, wherein the mount is for use in connecting the imaging device to the adjustment mechanism; and rotation determining means arranged to determine rotation of the imaging device, wherein: the rotation determining means is remote from the imaging device; the adjustment mechanism is responsive to movement information to rotate the mount relative to the support; and the movement information is generated on the basis of the determined rotation of the imaging device.

The rotation determining means may comprise a sensor fixedly attached to the mount; it may comprise a first sensor fixedly attached to the support and a second sensor fixedly attached to the adjustment mechanism; or it may comprise a sensor fixedly attached to the support and rotation calculating means. The apparatus may further comprise a connector adapted to connect the mount to the imaging device. This latter feature enables the apparatus to retrofit to custom, off-the-shelf, imaging devices.

The above embodiments are to be understood as illustrative examples of the invention. Further embodiments of the invention are envisaged. For example, although the adjustment mechanisms described above can adjust with three degrees of freedom, other embodiments may be capable of adjusting in one, two, four, five or six degrees of freedom.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. Mounting apparatus for use with a device, the apparatus comprising:
a mount;
an adjustment mechanism arranged to couple the mount to a support, the adjustment mechanism being configured to enable rotation of the mount relative to the support; and
a movement sensor arranged to sense movement of the apparatus and to generate movement information based on the sensed movement,
wherein:
the mount is adapted to be connected to the device such that the device is at a location distal from the adjustment mechanism; and
the adjustment mechanism is responsive to the generated movement information to rotate the mount relative to the support, whereby to compensate for the sensed movement.

2. Mounting apparatus according to claim 1, wherein the device is adapted for use with an imaging device having a 360 degree field of view in an imaging sensing plane, the mount having a longitudinal axis which is arranged to be positioned, when the imaging device is mounted thereon, normal to the image sensing plane.

3. Mounting apparatus according to claim 1 or 2, wherein the rotation of the mount relative to the support is around a first axis, whereby to compensate for the sensed movement.

4. Mounting apparatus according to claim 3, wherein the rotation of the mount relative to the support is around the first axis and a second axis, which are mutually orthogonal, whereby to compensate for the sensed movement.

5. Mounting apparatus according to any one of the preceding claims, wherein the support comprises a handle portion for use in a hand-held mode of operation.

6. Mounting apparatus according to any one of the preceding claims, wherein the adjustment mechanism is configured to enable the mount to translate relative to the support along a longitudinal axis of the mounting apparatus.

7. Mounting apparatus according to any one of claims 1 to 5, wherein the adjustment mechanism comprises an intermediate portion, the intermediate portion comprising a first end and a second end, the first end being coupled to the mount to enable rotation of the intermediate portion relative to the mount about a mount axis, and the second end being coupled to the support to enable rotation of the intermediate portion relative to the support about a support axis, wherein the mount axis has a first orientation and the support axis has a second orientation, different from the first orientation.

8. Mounting apparatus according to claim 7, wherein the intermediate portion comprises a plurality of parts, a first of the plurality of parts being coupled to a second of the plurality of parts to enable rotation of the first part relative to the second part about an intermediate axis.

9. Mounting apparatus according to any one of claims 1 to 5, wherein the adjustment mechanism comprises a first guide rail configured to facilitate movement of the mount in a first guiding plane.

10. Mounting apparatus according to claim 9, wherein the adjustment mechanism comprises a second guide rail configured to facilitate movement of the mount in a second guiding plane, and wherein the first guiding plane is substantially perpendicular to the second guiding plane.

11. Mounting apparatus according to claim 9 or claim 10, wherein the adjustment mechanism comprises an actuator attached to the first guide rail and to the support, for rotating the first guide rail, whereby to enable rotation of the mount relative to the support.

12. Mounting apparatus according to any one of the preceding claims, wherein the adjustment mechanism comprises a plurality of linear actuators, whereby to enable rotation of the mount relative to the support.

13. Mounting apparatus according to any preceding claim, comprising a controller configured to receive a signal from a movement sensor in the device and to generate said movement information.

14. An apparatus comprising:
an imaging device having a 360 degree field of view in an image sensing plane,
a mount having a longitudinal axis which is positioned normal to the image sensing plane;
an adjustment mechanism arranged to couple the mount to a support, the adjustment mechanism being configured to enable rotation of the mount relative to the support;
a movement sensor arranged to sense movement of the apparatus and to generate movement information based on the sensed movement,
wherein:
the mount is connected to the imaging device such that the imaging device is at a location distal from the adjustment mechanism; and
the adjustment mechanism is responsive to the generated movement information to rotate the mount relative to the support, whereby to compensate for the sensed movement.

15. Apparatus according to claim 14, wherein the imaging device is configured to generate imaging information, and the apparatus further comprises an image processor to process the imaging information to compensate for movement of the mount around the longitudinal axis.
